# EUROPEAN PATENT SPECIFICATION

(11) **EP 4 475 277 B1**
(45) Date of publication and mention of the grant of the patent: **15.07.2026**
(21) Application number: 24178354.7
(22) Date of filing: 28.05.2024
(51) Int. Cl.: H01M 10/613, H01M 10/635, H01M 50/204, H01M 50/317, H01M 50/375, H01M 50/249, H01M 50/383, H01M 50/682

(54) **MOBILE BODY**
MOBILER KÖRPER
CORPS MOBILE

(30) Priority: 05.06.2023 JP 2023092268
(43) Date of publication of application: 11.12.2024
(73) Proprietor: Subaru Corporation, Tokyo 150-8554 (JP)
(72) Inventor: OHSONO, Ryuichi, Tokyo, 150-8554 (JP); TACHIKAWA, Ritsuya, Tokyo, 150-8554 (JP); TANABE, Seiji, Tokyo, 150-8554 (JP); ICHIKI, Toshiyuki, Tokyo, 150-8554 (JP)
(74) Representative: Meissner Bolte Partnerschaft mbB

(56) References cited:
- EP-A1- 3 890 053
- FR-A1- 3 089 425
- JP-A- 2011 254 906
- US-A1- 2020 176 741

## Description

### BACKGROUND

### Technical Field

The present invention relates to a mobile body.

### Related Art

Once a battery mounted on a mobile body ignites, it remains hot even after the fire is extinguished and can re-ignite. Without preventing re-ignition, it is difficult to safely collect the battery after extinction. In order to prevent re-ignition, the battery may be kept at a low temperature or may be subjected to a discharge treatment, in which, for example, the battery is submerged in water.

For example, in the technique disclosed in Japanese Unexamined Patent Application Publication JP 2021- 122 031 A, when a battery (battery module) reaches a predetermined temperature (for example, 100 °C), a liquid, such as water, is supplied into a housing accommodating the battery to submerge the battery in the water (liquid). Another patent publication, US2020/176741A1 discloses a battery with a venting hole and a venting valve that closes when temperature raises above a threshold.

### SUMMARY

An aspect of the invention provides a mobile body. The mobile body includes a battery, a housing, and a closing member. The housing has a vent hole and accommodates the battery. The closing member is configured to close the vent hole when a temperature of the closing member exceeds a predetermined temperature. The closing member is made of a thermally expandable refractory material configured to expand at the predetermined temperature, and is disposed on a periphery of the vent hole so as to close the vent hole when the closing member expands.

### BRIEF DESCRIPTION OF THE DRAWINGS

The accompanying drawings are included to provide a further understanding of the invention and are incorporated in and constitute a part of this specification. The drawings illustrate an embodiment and, together with the specification, serve to describe the principles of the invention.
FIG. 1 is a perspective view of an unmanned aerial vehicle according to an embodiment;
FIG. 2 is a sectional view of a battery unit according to the embodiment;
FIG. 3 is a sectional view illustrating the state of the battery unit at the normal time;
FIG. 4 is a sectional view illustrating the state of the battery unit at the time of ignition; and
FIG. 5 is a sectional view illustrating the state of the battery unit after extinction.

### DETAILED DESCRIPTION

In the technique disclosed in JP 2021- 122 031 A, the battery is surrounded by the housing. Thus, it is difficult to ensure the ventilation of the battery at the normal time. In particular, batteries mounted on aircrafts such as multicopters may require good ventilation to facilitate heat dissipation.

It is desirable to provide a battery that has good ventilation in the normal time and that is safe after extinction.

### Overall Configuration of Unmanned Aerial Vehicle

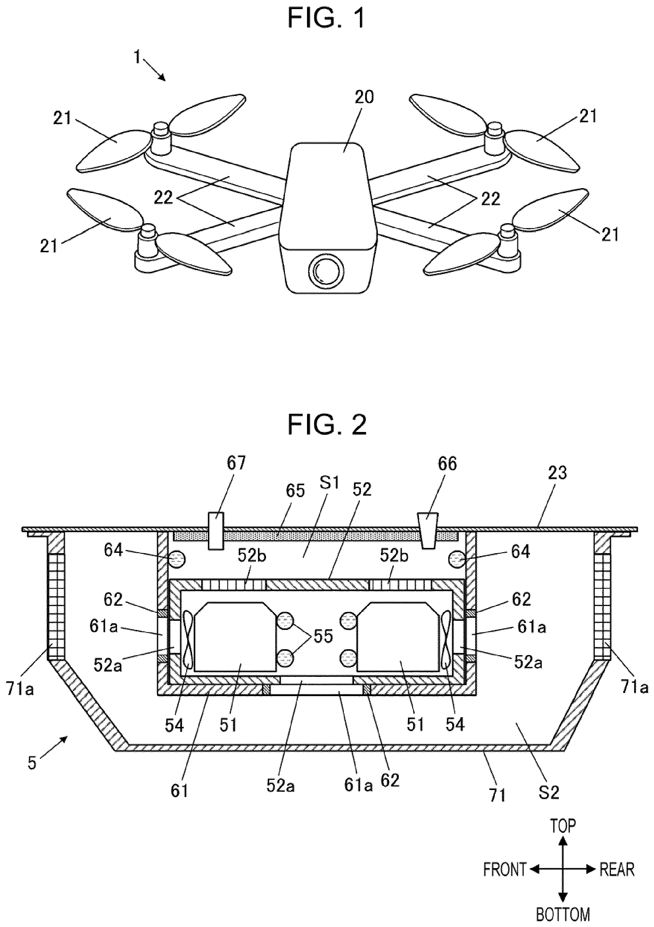

FIG. 1 is a perspective view of an unmanned aerial vehicle 1 according to this embodiment.

As illustrated in FIG. 1, the unmanned aerial vehicle (hereinbelow, simply referred to as an "unmanned vehicle") 1 according to this embodiment is an example of a mobile body according to the present invention, and is a multicopter that obtains lift (thrust) by multiple rotary wings (propellers) 21.

For example, the unmanned vehicle 1 includes a main body 20 and multiple rotary wings 21.

The multiple rotary wings 21 are provided at the distal ends of multiple arms 22 extending in four directions from the main body 20.

The main body 20 has a rectangular box shape and includes a battery unit 5 (see FIG. 2) that supplies power to the respective parts of the unmanned vehicle 1.

### Configuration of Battery Unit

FIG. 2 is a sectional view of the battery unit 5.

As illustrated in FIG. 2, the battery unit 5 includes a battery case 52 that accommodates one or more (in this embodiment, two) battery cells 51.

The battery case 52 has a rectangular box shape, for example.

First vent holes 52a communicating between the inside and the outside of the battery case 52 are formed in the side plates and the bottom plate (lower plate) of the battery case 52. However, the position, shape, number and the like of the first vent holes 52a are not particularly limited, as long as there is one first vent hole 52a provided in any of the side plates and the bottom plate of the battery case 52.

The top plate of the battery case 52 has multiple slit holes 52b, which are holes with slits. The slit holes 52b are through-holes through which a fire extinguishing agent 65 and a discharge-treatment liquid, such as water, are poured into the case when the battery cells 51 ignites. In this embodiment, the slit holes 52b are formed directly above the battery cells 51.

Cooling fans 54 and a first cooling water pipe 55 for cooling the battery cells 51 are disposed in the battery case 52.

The cooling fans 54 are disposed, for example, beside the battery cells 51 and ventilate the inside of the battery case 52 when driven.

The first cooling water pipe 55 is routed inside the battery case 52 so as to extend along the battery cells 51, for example, and are coupled at both ends thereof to an external cooling water pump (not illustrated). When the cooling water pump is driven, the cooling water circulates through the first cooling water pipe 55 to cool the inside of the battery case 52.

The battery case 52 is removably accommodated in a battery mount shelf 61. For example, the battery case 52 can be attached to and removed from the battery mount shelf 61 by being inserted and removed in the direction perpendicular to the plane of the drawing of FIG. 2.

The battery mount shelf 61 is formed in a shape that is open at the top and is attached to the lower surface of a vehicle body 23 such that the opening is closed by the vehicle body 23. The vehicle body 23 is a part of the main body 20 of the unmanned vehicle 1. The battery mount shelf 61 is formed in a shape substantially corresponding to the battery case 52 at least in plan view, and accommodates the battery case 52 with almost no clearance with respect to the side plates and the bottom plate of the battery case 52.

Second vent holes 61a corresponding to the first vent holes 52a provided in the battery case 52 are formed in the side plates and the bottom plate of the battery mount shelf 61. The second vent holes 61a, together with the first vent holes 52a provided at the corresponding positions, communicate between the inside of the battery case 52 and the outside of the battery mount shelf 61.

Note that the position, shape, number and the like of the second vent holes 61a are not particularly limited, as long as there is one second vent hole 61a provided in any of the side plates and the bottom plate of the battery mount shelf 61 so as to correspond to the first vent hole 52a.

The second vent holes 61a are provided with closing members 62 capable of closing the second vent holes 61a. The closing members 62 automatically close the second vent holes 61a without being electrically controlled by an external device when the temperature of the closing members 62 exceeds a predetermined temperature.

For example, the closing members 62 may be made of a thermally expandable refractory material. The thermally expandable refractory material is a refractory material that expands several to several tens of times its original size at a predetermined temperature and is used to protect buildings from fire and to prevent fire from spreading, for example. The closing members 62, made of the thermally expandable refractory material, may be disposed on the peripheries of the second vent holes 61a so as to close the second vent holes 61a as the closing members 62 expand.

The structure of the closing members 62 is not particularly limited as long as the closing members 62 close the second vent holes 61a when the temperature of the closing members 62 exceeds a predetermined temperature.

For example, the closing members 62 may be fireproof shutters for closing the second vent holes 61a, the shutters being positioned on one side by metallic wires that burn out at a predetermined temperature. Although it is desirable that the closing members 62 completely seal the second vent holes 61a so as not to allow air to escape when the second vent holes 61a are closed, a sealed state that does not allow leakage of a large amount of water (liquid) may be sufficient.

An internal space S1 of the battery mount shelf 61 (more precisely, a space defined by the battery mount shelf 61 and the vehicle body 23) has a space (surplus space) above the battery case 52. A second cooling water pipe 64 and the fire extinguishing agent 65 are provided in this space in the internal space S1.

The second cooling water pipe 64 is attached to the side plates of the battery mount shelf 61, near the battery case 52, for example. Both ends of the second cooling water pipe 64 are coupled to an external cooling water pump (not illustrated).

When the cooling water pump is driven, the cooling water circulates through the second cooling water pipe 64 to cool the battery case 52. The second cooling water pipe 64 may belong to the same cooling system as the first cooling water pipe 55, or may belong to a different cooling system.

The fire extinguishing agent 65 is disposed above the battery case 52 and is fixed to the lower surface of the vehicle body 23. The fire extinguishing agent 65 is sealed so as to be dropped onto the battery case 52 below when the ambient temperature of the internal space S1 exceeds a predetermined temperature. The "predetermined temperature" is a temperature inside the internal space S1 at which the battery cells 51 are considered to have ignited.

It is preferable that the fire extinguishing agent 65 be disposed at least above the slit holes 52b. However, it is sufficient that the fire extinguishing agent 65 is provided so as to automatically fall on the battery cells 51 without being controlled by an external device when the temperature exceeds the predetermined temperature.

Furthermore, a pressure regulating valve 66 and a liquid supply port 67 are provided in the internal space S1 of the battery mount shelf 61.

The pressure regulating valve 66 is disposed in the vehicle body 23 so as to communicate between the internal space S1 and the outside, and is closed in the normal state (normal time). The pressure regulating valve 66 communicates between the internal space S1 and the outside when the temperature reaches the predetermined temperature (or when the pressure regulating valve 66 is manually operated).

The liquid supply port 67 is disposed in the vehicle body 23 so as to communicate between the internal space S1 and the outside, and is closed in the normal state. The end of the liquid supply port 67 on the outside (i.e., the upper side in FIG. 2) is a socket to which a liquid supply hose or the like can be attached, for example.

By attaching the liquid supply hose or the like to the outside end of the liquid supply port 67, a discharge-treatment liquid can be supplied from the outside to the internal space S1.

The battery mount shelf 61 is surrounded by a battery cover 71 from the outside.

The battery cover 71 is exposed on the outside of the unmanned vehicle 1. For example, the battery cover 71 is formed in a shape that is open at the top and is attached to the lower surface of the vehicle body 23 such that the opening is closed by the vehicle body 23.

The battery cover 71 is disposed so as to surround the overall battery mount shelf 61 except for the top of the battery mount shelf 61 with a predetermined ventilation space S2 left between the battery cover 71 and the battery mount shelf 61.

Vent holes 71a having a mesh structure communicating between the outside of the unmanned vehicle 1 and the ventilation space S2 are provided in the side plates of the battery cover 71. Note that the position, shape, number and the like of the vent holes 71a are not particularly limited, as long as the vent hole 71a is provided so as to communicate between the outside and the ventilation space S2.

### Function and Operation of Battery Unit

Next, the function and the operation of the battery unit 5 will be described.

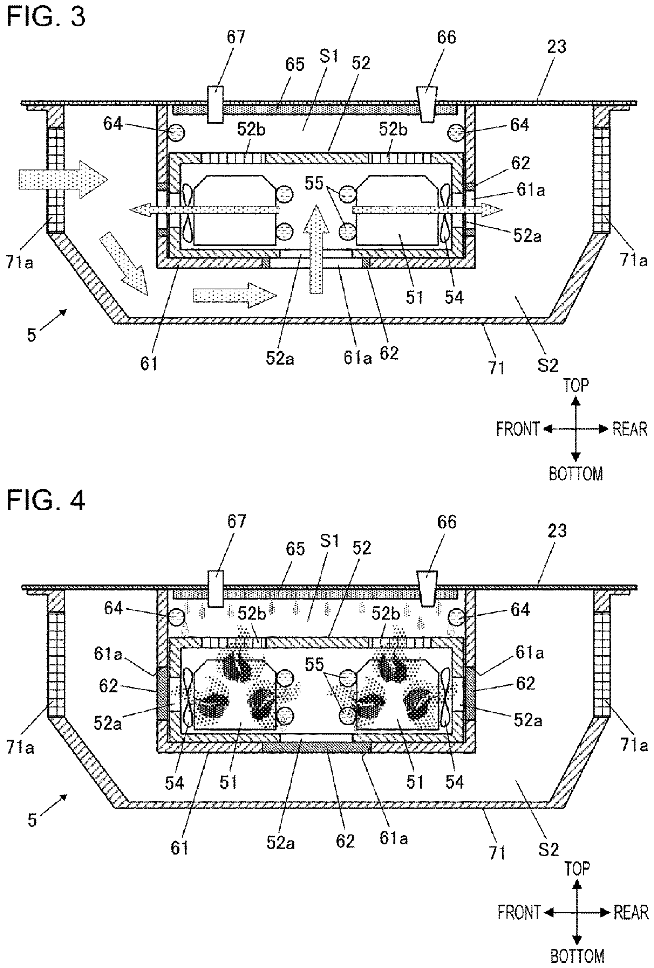

FIGS. 3, 4, and 5 are sectional views illustrating the states of the battery unit 5 at the normal time, at the time of ignition, and after extinction, respectively.

The "normal time" means the time other than an emergency including the time of ignition and after extinction.

### Normal Time

At the normal time (for example, when the unmanned vehicle 1 is flying), the battery unit 5 supplies necessary electric power, generated by the battery cells 51, to the respective parts of the unmanned vehicle 1.

At this time, as illustrated in FIG. 3, the battery cells 51 are air-cooled by the cooling fans 54 that ventilate the inside of the battery case 52. For example, first, the air outside the unmanned vehicle 1 flows into the ventilation space S2 inside the battery cover 71 through the vent hole 71a on the front side of the unmanned vehicle 1.

The air in the ventilation space S2 flows into the battery case 52 through the first vent hole 52a and the second vent hole 61a on the lower side, for example, to cool the battery cells 51. Then, the air flows out to the ventilation space S2 from the first vent holes 52a and the second vent holes 61a on the sides. The air flowing out of the battery case 52 into the ventilation space S2 flows out of the unmanned vehicle 1 through the vent hole 71a on the rear side of the unmanned vehicle 1, for example.

In this way, the battery unit 5 has good ventilation. Thus, the heat of the battery cells 51 is appropriately removed at the normal time.

Also at this time, the battery case 52 is water-cooled (liquid-cooled) by the cooling water flowing through the first cooling water pipe 55 and the second cooling water pipe 64. For example, the cooling water is circulated through the first cooling water pipe 55 inside the battery case 52 and the second cooling water pipe 64 outside the battery case 52 by the cooling water pump (not illustrated). The first cooling water pipe 55 directly cools the battery cells 51, and the second cooling water pipe 64 indirectly cools the battery cells 51 from the outside of the battery case 52.

### Time of Ignition

When the battery cells 51 ignite due to some factor, the battery unit 5 performs a fire extinguishing operation.

As illustrated in FIG. 4, the closing members 62 close the second vent holes 61a in the battery mount shelf 61 to shut off the source of fire from the outside air. The closing members 62 according to this embodiment are made of a thermally expandable refractory material, so, when the battery cells 51 ignite, the closing members 62 are heated beyond a predetermined temperature, expand, and close the second vent holes 61a. This suppresses the spread of fire.

As the ambient temperature rises due to the ignition of the battery cells 51, the fire extinguishing agent 65 disposed above the battery case 52 melts and drops. The fire extinguishing agent 65 drops onto the battery case 52 below, passes through the slit holes 52b, and falls on the battery cells 51 in the battery case 52 to extinguish the fire.

Alternatively, a valve may be provided in the second cooling water pipe 64, so that the cooling water in the second cooling water pipe 64 is discharged when the valve is opened manually or automatically (according to the temperature). The valve may be replaced with another structure that enables the cooling water in the second cooling water pipe 64 to be manually or automatically discharged to the outside.

For example, a portion vulnerable to heat may be provided in a part of the second cooling water pipe 64, so that the cooling water inside the second cooling water pipe 64 automatically leaks out when a predetermined temperature is reached.

Furthermore, the first cooling water pipe 55 may also be provided with a similar structure that enables the cooling water in the first cooling water pipe 55 to be manually or automatically discharged to the outside.

This structure enables the cooling water to be discharged to the internal space S1 of the battery mount shelf 61 to extinguish the fire on the battery cells 51.

### After Extinction

As described above, the fire on the battery cells 51 is extinguished by dropping the fire extinguishing agent 65 and/or discharging the cooling water.

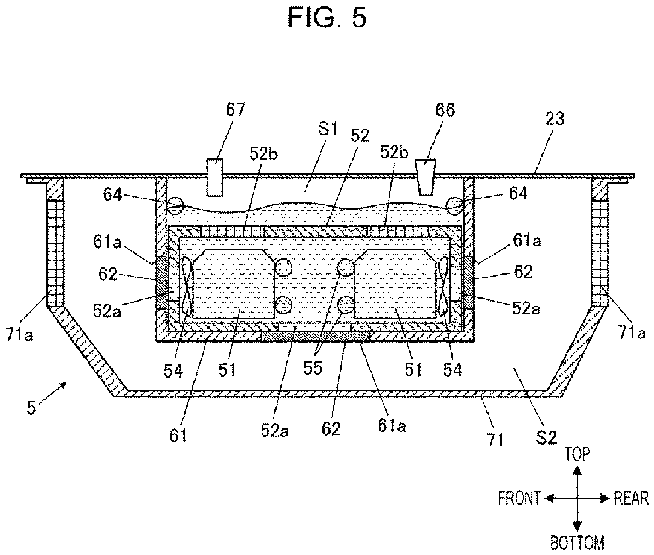

When the cooling water is discharged to the internal space S1 of the battery mount shelf 61 at the time of extinction, the internal space S1 is filled with the cooling water, as illustrated in FIG. 5, because the second vent holes 61a in the battery mount shelf 61 are closed by the closing members 62.

When the amount of water in the internal space S1 is insufficient (for example, when the battery case 52 is not completely submerged in the water), or when the cooling water has not been discharged to extinguish the fire, the cooling water may be further discharged, or a discharge-treatment liquid may be supplied to the internal space S1 from the outside through the liquid supply port 67.

By doing so, the battery cells 51 can be submerged in water or liquid together with the battery case 52. Thus, the battery cells 51 can be cooled and discharged with a sufficient amount of water (liquid).

The discharge-treatment liquid to be supplied to the internal space S1 is not particularly limited as long as it promotes discharge of the battery cells 51. Examples of the liquid include sodium chloride solution having a predetermined concentration, water, an anionic surface active agent disclosed in Japanese Patent No. 6847716, and weakly acidic alkali metal salt solution described in JP 2005- 347 162 A.

When the liquid is supplied, the pressure regulating valve 66 may be opened to release the air (including the generated gas) in the internal space S1 to the outside. The pressure regulating valve 66 may be opened manually or automatically at the time of ignition.

As described above, according to this embodiment, the second vent holes 61a in the battery mount shelf 61 accommodating the battery case 52 (battery cells 51) are closed by the closing members 62 when the temperature of the closing members 62 exceeds the predetermined temperature.

Thus, in the normal time, the ventilation in the battery case 52 (battery cells 51) through the second vent holes 61a is ensured. Furthermore, at the time of ignition and after extinction, the internal space S1 of the battery mount shelf 61 in which the second vent holes 61a are closed is filled with the discharge-treatment liquid, so that the battery case 52 is submerged in the liquid. Thus, the discharge treatment of the battery cells 51 is properly performed to suppress the possibility of re-ignition or electric shock, and enable the battery case 52 to be safely collected.

Hence, the battery that has good ventilation in the normal time and that is safe after extinction is achieved.

Furthermore, according to this embodiment, there is provided a liquid supply member (one or more of the first cooling water pipe 55, the second cooling water pipe 64, and the liquid supply port 67) through which the discharge-treatment liquid can be supplied to the internal space S1 of the battery mount shelf 61.

This enables the discharge-treatment liquid to be quickly supplied to the internal space S1 at the time of ignition or after extinction. Thus, the battery cells 51 can be appropriately extinguished or submerged in water.

Furthermore, according to this embodiment, the closing members 62 are made of a thermally expandable refractory material that expands at a predetermined temperature, and are disposed on the peripheries of the second vent holes 61a so as to close the second vent holes 61a when the closing members 62 expand.

Thus, the second vent holes 61a can be automatically and appropriately closed at a predetermined temperature with a simple structure without being electrically controlled.

According to this embodiment, the fire extinguishing agent 65 that drops at a predetermined temperature is disposed in the internal space S1 of the battery mount shelf 61, above the battery case 52.

Thus, the ignited battery case 52 (battery cells 51) can be automatically and appropriately extinguished with a simple structure without being electrically controlled.

According to this embodiment, the battery mount shelf 61 removably accommodates the battery case 52 accommodating the battery cells 51.

With this structure, multiple battery cells 51 and other components can be formed as a module (unit), making handling of the module, including collection after extinction, easy.

Although the embodiment of the present invention has been described above, the present invention is not limited to the above-described embodiment.

For example, in the above embodiment, the fire on the battery cells 51 is extinguished with the fire extinguishing agent 65 and cooling water. However, the fire may be extinguished with the fire extinguishing agent 65 alone, without using cooling water. In this case, the first cooling water pipe 55 and the second cooling water pipe 64 are unnecessary.

The liquid used in the cooling system of the battery cells 51 is water (cooling water) or a liquid containing additives, such as anti-freezing agent and the like.

In the above embodiment, the second vent holes 61a in the battery mount shelf 61 are closed by the closing members 62, and the discharge-treatment liquid is supplied to the internal space S1 of the battery mount shelf 61. However, closing members may be disposed in the first vent holes 52a in the battery case 52. At the time of ignition, the first vent holes 52a may be closed by the closing members, and the liquid may be supplied into the battery case 52. Also with this structure, the battery cells 51 can be submerged in water.

In the above-described embodiment, an unmanned aerial vehicle has been described as an example of the mobile body according to the present invention. However, the present invention may be widely applied to mobile bodies, such as cars, ships, and toys of these, equipped with batteries.

However, the mobile body according to the present invention can be more suitably applied to aircrafts, which face a strong demand for ventilation of the batteries at the normal time and reduction in weight of the batteries, than automobiles (electric automobiles), in which batteries are sealed in rigid housings.

The details described in the above embodiment can be appropriately modified without departing from the scope of the present invention as defined by the claims.

According to the present invention, the vent holes in the housing accommodating the batteries are closed by the closing members when the temperature of the closing members exceeds the predetermined temperature. Thus, in the normal time, ventilation of the battery through the vent hole is ensured.

Furthermore, at the time of ignition or after extinction, the housing in which the vent holes are closed is filled with the discharge-treatment liquid, so that the batteries are submerged in water. Hence, the battery that has good ventilation in the normal time and that is safe after extinction is achieved.

## Claims

1. A mobile body comprising:
- a battery (51);
- a housing (61) having a vent hole (52a, 61a) and accommodating the battery (51); and
- a closing member (62) configured to close the vent hole (52a, 61a) when a temperature of the closing member (62) exceeds a predetermined temperature,
**characterized in that** the closing member (62) is made of a thermally expandable refractory material configured to expand at the predetermined temperature, and is disposed on a periphery of the vent hole (52a, 61a) so as to close the vent hole (52a, 61a) when the closing member (62) expands.

2. The mobile body according to claim 1,
further comprising a liquid supply member (67) configured to supply a discharge-treatment liquid into the housing (61).

3. The mobile body according to any one of claims 1 or 2,
wherein a fire extinguishing agent (65) configured drop at a predetermined temperature is disposed above the battery (51) in the housing (61).

4. The mobile body according to any one of claims 1 to 3,
wherein the battery (51) is a battery cell (51) accommodated in a case (52), and the housing (61) removably accommodates the case (52).

## Patentansprüche

1. Mobiler Körper, welcher Folgendes aufweist:
- eine Batterie (51);
- ein Gehäuse (61), das eine Entlüftungsöffnung (52a, 61a) aufweist und die Batterie (51) aufnimmt; und
- ein Verschlusselement (62), das so ausgebildet ist, dass es die Entlüftungsöffnung (52a, 61a) verschließt, wenn eine Temperatur des Verschlusselements (62) eine vorbestimmte Temperatur überschreitet,
**dadurch gekennzeichnet,**
**dass** das Verschlusselement (62) aus einem thermisch ausdehnbaren feuerfesten Material besteht, das so ausgebildet ist, dass es sich bei der vorbestimmten Temperatur ausdehnt und an einem Umfang der Entlüftungsöffnung (52a, 61a) angeordnet ist, um die Entlüftungsöffnung (52a, 61a) zu verschließen, wenn sich das Verschlusselement (62) ausdehnt.

2. Mobiler Körper nach Anspruch 1,
welcher ferner ein Flüssigkeitszuführungselement (67) aufweist, das so ausgelegt ist, dass es eine Entladungsbehandlungsflüssigkeit in das Gehäuse (61) zuführt.

3. Mobiler Körper nach einem der Ansprüche 1 oder 2,
wobei ein Feuerlöschmittel (65), das so ausgelegt ist, dass es bei einer vorbestimmten Temperatur tropft, oberhalb der Batterie (51) im Gehäuse (61) angeordnet ist.

4. Mobiler Körper nach einem der Ansprüche 1 bis 3,
wobei die Batterie (51) eine in einem Behälter (52) untergebrachte Batteriezelle (51) ist und das Gehäuse (61) den Behälter (52) herausnehmbar aufnimmt.

## Revendications

1. Corps mobile comprenant :
- une batterie (51) ;
- un logement (61) ayant un trou d'évent (52a, 61a) et recevant la batterie (51) ; et
- un élément de fermeture (62) configuré pour fermer le trou d'évent (52a, 61a) quand une température de l'élément de fermeture (62) dépasse une température prédéterminée,
**caractérisé en ce que**
l'élément de fermeture (62) est fait dans un matériau réfractaire thermiquement expansible configuré pour être mis en expansion à la température prédéterminée, et est disposé sur une périphérie du trou d'évent (52a, 61a) de manière à fermer le trou d'évent (52a, 61a) quand l'élément de fermeture (62) est en expansion.

2. Corps mobile selon la revendication 1,
comprenant en outre un élément d'alimentation en liquide (67) configuré pour alimenter un liquide de traitement de décharge jusque dans le logement (61).

3. Corps mobile selon l'une quelconque des revendications 1 ou 2,
dans lequel un agent extincteur (65) configuré pour s'écouler à une température prédéterminée est disposé au-dessus de la batterie (51) dans le logement (61).

4. Corps mobile selon l'une quelconque des revendications 1 à 3,
dans lequel la batterie (51) est une cellule de batterie (51) reçue dans un boîtier (52), et le logement (61) reçoit le boîtier (52) de manière amovible.
